# EUROPEAN PATENT APPLICATION

(11) **EP 3 527 802 A1**
(43) Date of publication of application: **21.08.2019**
(21) Application number: 19151814.1
(22) Date of filing: 15.01.2019
(51) Int. Cl.: F02C 7/36

(54) **A DRIVESHAFT**

(30) Priority: 14.02.2018 GB 201802401
(71) Applicant: Rolls-Royce plc, London SW1E 6AT (GB)
(72) Inventor: Maguire, Alan, Derby, Derbyshire DE24 8BJ (GB)
(74) Representative: Rolls-Royce plc

(57) **Abstract**

A turbofan engine driveshaft comprises, in axial sequence along an axial centreline, a driving portion, and a driven portion. The driving portion has a first end and a second end. The second end of driving portion is connected to the driven portion. The driven portion comprises an annular drum having a radially inwardly facing surface, with the annular drum having a stiffener attached to the radially inwardly facing surface.

The driveshaft is supported radially by a bearing assembly at the connection between the driving portion and the driven portion. The driving portion is configured to accommodate a predetermined range of movement of the outer end relative to the inner end.

## Description

### Field of the Disclosure

The present disclosure relates to a turbofan engine driveshaft and particularly, but not exclusively, to a turbofan engine driveshaft for a geared turbofan engine.

### Background to the Disclosure

Geared gas turbine engines have a gearbox to drive the fan or propeller. The gearbox may be a planetary gearbox which allows the speed of rotation of the fan or propeller to be reduced compared to the speed of rotation of a driving turbine. This improves the efficiency of the fan, or the propeller, and the turbine. A planetary gearbox comprises a sun gear, an annulus gear and a plurality of planet gears rotatably mounted in a planet carrier. The sun gear is arranged to be driven by the turbine, the annulus gear is fixed to static structure, the planet gears orbit around the sun gear and the planet carrier drives the fan or propeller. The gearbox may be a star gearbox which comprises a sun gear, an annulus gear and a plurality of star gears rotatably mounted in a star carrier. The sun gear is arranged to be driven by the turbine, the star carrier is fixed to static structure, the star gears rotate around their own axes and the annulus gear drives the fan or propeller.

A geared gas turbine engine generally has an intermediate pressure compressor, or booster compressor, a high pressure compressor, a high pressure turbine and a low pressure turbine. The high pressure turbine directly drives the high pressure compressor via a high pressure shaft. The low pressure turbine directly drives the intermediate pressure compressor via a low pressure shaft and an intermediate pressure compressor drive shaft. The low pressure turbine drives the fan, or propeller, via the low pressure shaft, a gearbox input drive shaft, the gearbox and a gearbox output drive shaft.

Currently, the gearbox output drive shaft connects the gearbox to the low pressure compressor or fan. This gearbox output drive shaft must possess a measure of flexibility in order to provide load isolation between the gearbox and the low pressure compressor or fan. This flexibility is typically achieved by the inclusion of a flexible portion in the drive shaft. This flexible portion in turn limits the location of the forward shaft bearing, which in turn results in a long gearbox output shaft. This increases the weight and packaging volume of the engine.

Accordingly, the present disclosure seeks to provide a turbofan gas turbine engine comprising a gearbox in which the above mentioned problem is reduced or overcome.

### Statements of Disclosure

According to a first aspect of the present disclosure there is provided a turbofan engine driveshaft comprising, in axial sequence along an axial centreline,
a driving portion having a first end and a second end; and
a driven portion,
wherein the second end of the driving portion is connected to the driven portion, the driven portion comprises an annular drum having a radially inwardly facing surface, the annular drum having a stiffener attached to the radially inwardly facing surface, the driveshaft being supported radially by a bearing assembly at the connection between the driving portion and the driven portion, the driving portion being configured to accommodate a predetermined range of movement between the first end and the second end of the driving portion.

The use of a re-entrant geometry for the driving portion of the driveshaft, provides a space-efficient arrangement and that also includes a degree of flexibility between the driving portion and the driven portion.

In a typical turbofan application of the disclosed driveshaft, the driveshaft would provide power transmission between the gearbox output and the fan. The provision of a degree of flexibility resulting from the predetermined range of movement of the outer end relative to the inner end of the driving portion, improves the performance of the drive to the fan.

Optionally, the stiffener comprises a plurality of stiffener portions extending radially inwardly from the radially inwardly facing surface.

Optionally, the stiffener comprises three diaphragm stiffener portions extending radially inwardly from the radially inwardly facing surface.

The provision of three radially inwardly facing diaphragm stiffener portions provides a balance between increased stiffness and the resulting increase in weight.

Optionally, the driving portion is separably attached to the driven portion by a first joint assembly.

The first joint assembly makes the installation of the driveshaft simpler and quicker for a user. Likewise, removal of the driveshaft for repair and overhaul purposes is greatly simplified by the first joint assembly.

In an alternative arrangement, the driven portion is integrally formed with the driving portion. The driven portion and driving portion may, for example, be machined from a single blank, or formed by an additive layer manufacturing technique. Alternatively, the driven portion and driving portion may be manufactured separately manufactured and subsequently permanently joined by, for example, welding.

Optionally, the first joint assembly is a Curvic™ coupling.

A Curvic™ coupling provides a space-efficient joint assembly with a high torque carrying capability.

Optionally, the driving portion comprises an axially extending cylindrical portion between the first end and the second end, the cylindrical portion providing a predetermined range of radial movement between the first end and the second end of the driving portion.

The axially extending cylindrical portion provides the second end of the driving portion with a range of radial movement relative to the first end of the driving portion. In other words, the resulting driveshaft is capable of accommodating a predetermined range of radial movement between the second end of the driving portion and the driven portion.

Optionally, a radial thickness of the cylindrical portion varies along the axial length of the cylindrical portion.

Selection of the tapering profile for the thickness of the cylindrical portion enables the range of radial movement between the first end and the second end of the driving portion to be determined for a range of operational conditions for the driveshaft.

Optionally, the driving portion comprises a radially extending diaphragm portion between the first end and the second end, the diaphragm portion providing a predetermined range of axial movement between the first end and the second end of the driving portion.

The radially extending cylindrical portion provides the second end of the driving portion with a range of axial movement relative to the first end of the driving portion. In other words, the resulting driveshaft is capable of accommodating a predetermined range of axial movement between the second end of the driving portion and the driven portion.

Optionally, the diaphragm portion extends from a radially inner end to a radially outer end, and an axial thickness of the diaphragm portion at the radially inner end is greater than the axial thickness at the radially outer end.

Selection of the tapering profile for the thickness of the cylindrical portion enables the range of axial movement between the first end and the second end of the driving portion to be determined for a range of operational conditions for the driveshaft.

Optionally, the driving portion comprises an axially splined coupling between the first end and the second end, the axially splined coupling providing a predetermined range of axial movement between the first end and the second end of the driving portion.

The axially splined coupling provides the second end of the driving portion with a range of axial movement relative to the first end of the driving portion. In other words, the resulting driveshaft is capable of accommodating a predetermined range of axial movement between the second end of the driving portion and the driven portion.

Optionally, the bearing assembly is positioned radially outwardly of the connection between the driving portion and the driven portion.

Positioning the bearing assembly axially coincident with the connection between the driving portion and the driven portion enables the length of the driveshaft to be reduced, which in turn makes the driveshaft lighter and more space-efficient.

According to a second aspect of the present disclosure, there is provided a gas turbine engine comprising, in axial sequence:
a core engine;
a gearbox:
   a driveshaft according to the first aspect; and
   a fan,
wherein an output from the gearbox is operatively connected to the driving portion of the driveshaft, and the driven portion of the gearbox is operatively connected to the fan.

As noted elsewhere herein, the present disclosure may relate to a gas turbine engine. Such a gas turbine engine may comprise an engine core comprising a turbine, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.
In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes. The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.37, 0.35, 0.34, 0.33, 0.32, 0.31, 0.3, 0.29, 0.28, 0.27, 0.26,or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the velocity of the fan tip, for example at the leading edge of the tip (which may be defined as fan tip radius at leading edge multiplied by rotational speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limiting example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

A gas turbine engine as described and/or claimed herein may have any desired maximum thrust. Purely by way of non-limiting example, a gas turbine as described and/or claimed herein may be capable of producing a maximum thrust of at least (or on the order of) any of the following: 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (101.3kPa, 30 deg C).

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

The skilled person will appreciate that except where mutually exclusive, a feature described in relation to any one of the above aspects may be applied to any other aspect. Furthermore, except where mutually exclusive, any feature described herein may be applied to any aspect and/or combined with any other feature described herein.

### Brief Description of the Drawings

There now follows a description of an embodiment of the disclosure, by way of non-limiting example, with reference being made to the accompanying drawings in which:
Figure 1 shows a schematic sectional view of a geared turbofan gas turbine engine incorporating a driveshaft according to the present disclosure;
Figure 2 shows an enlarged schematic view of the gearbox region of the engine of Figure 1;
Figure 3 shows a schematic axial view of the gearbox of the engine of Figure 1;
Figure 4 is a schematic part-sectional view of the engine of Figure 1 showing a first embodiment of the driveshaft;
Figure 5 is a schematic part-sectional view of the engine of Figure 1 showing a second embodiment of the driveshaft; and
Figure 6 is a schematic part-sectional view of the engine of Figure 1 showing a third embodiment of the driveshaft.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

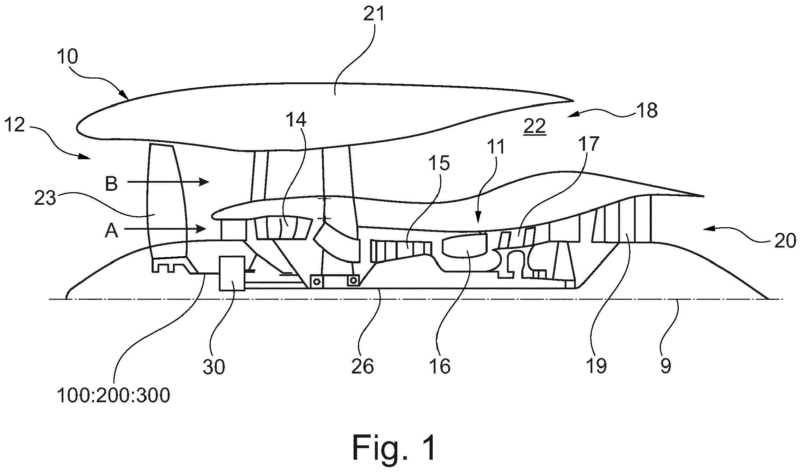

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

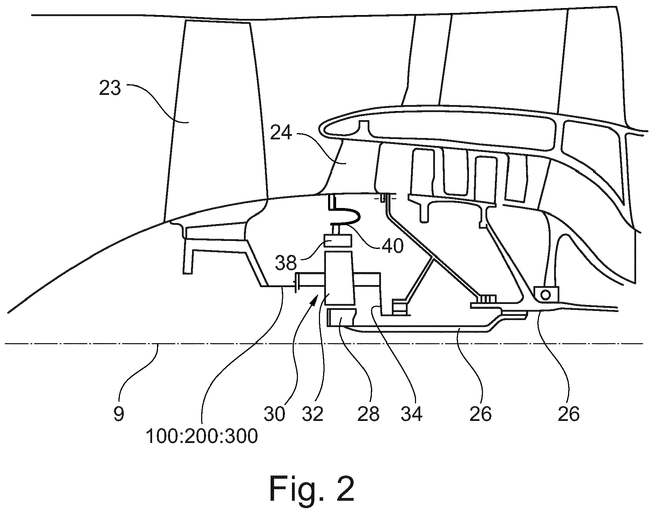

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

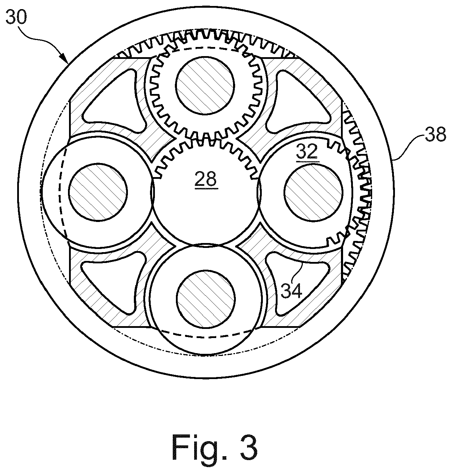

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via driveshaft 100:200:300, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 40, and the driveshaft 100:200:300 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output, support linkages, driveshafts, and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor, propeller (aero or hydro), or electrical generator).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

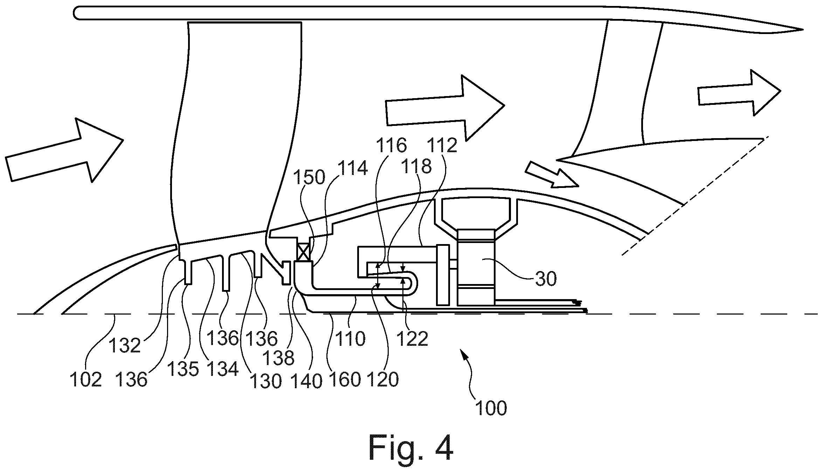

Referring to Figure 4, a turbofan engine driveshaft according to a first embodiment of the disclosure is designated generally by the reference numeral 100.

The driveshaft 100 has an axis of rotation 102, which is coincident with the principal rotational axis 9 of the turbofan engine 10. The driveshaft 100 comprises, in axial sequence, a driving portion 110 and a driven portion 130.

The driving portion 110 has a first end 112 and an opposite second end 114. The second end 114 of the driving portion 110 is connected to the driven portion 130 by a first joint assembly 138. In the present embodiment, the first joint assembly 138, between the driving portion 110 and the driven portion 130, takes the form of a Curvic™ coupling 140. In alternative embodiments the first joint assembly 138 may take the form of an alternative connection such as, for example, a bolted flange, or a tapered joint.

In still further alternative embodiments, the first joint assembly 138 may be a permanent connection such as, for example, by welding, brazing or the like. In yet still further alternative embodiments, the driving portion 110 and the driven portion 130 may be integrally formed by any suitable method such as, for example, casting, forging, and additive layer manufacturing.

The driven portion 130 comprises an annular drum 132 having a radially inwardly facing surface 134. The annular drum 132 has a stiffener 135 attached to the radially inwardly facing surface 134.

In the embodiment of Figure 4, the stiffener 135 comprises three diaphragm stiffener portions 136 extending radially inwardly from the radially inwardly facing surface 134. In other embodiments of the disclosure, the stiffener 135 may comprise an alternative quantity (such as, for example, 1 or 2 or 4) of diaphragm stiffener portions 136 extending radially inwardly from the radially inwardly facing surface 134. Alternatively, the stiffener 135 may take the form of another stiffening structure such as, for example, a cellular structure that is attached to the radially inwardly facing surface 134.

The driveshaft 100 is supported radially by a bearing assembly 150. The bearing assembly 150 is positioned axially along the driveshaft at the connection between the driving portion 110 and the driven portion 130. In other words, the bearing assembly 150 is positioned at the first joint assembly 138.

The driving portion 110 is configured to accommodate a range of movement 116 between the the first end 112 and the second end 114 of the driving portion 110. In other words, the driving portion 110 is configured to allow the first end 112 to move relative to the second end 114.

In the embodiment of Figure 4 the driving portion 110 comprises an axially extending cylindrical portion 118. The driving portion 110 is formed with a serpentine cross-sectional profile in which the axially extending cylindrical portion 118 is embodied. In the present embodiment, the axially extending cylindrical portion 118 has a radial thickness 122 (i.e. a thickness in the radial direction) that varies monotonically axially along the cylindrical portion 118. In an alternative embodiment, the radial thickness 122 is constant axially along the cylindrical portion 118.

In use, the cantilevered geometrical form of the axially extending cylindrical portion 118 allows the first end 112 of the driving portion 110 to move radially relative to the second end 114 of the driving portion 110. This range of radial movement 120 provides for misalignment between the first end 112 and the second end 114 of the driving portion 110. In the arrangement of Figure 4, the driving portion 110 is operatively connected to the planet carrier of the epicyclic gearbox 30. The driving portion 110 is also connected to a forward, or upstream, end of a fan shaft 160. The fan shaft 160 extends rearwardly (in a downstream direction) and provides support for the fan.

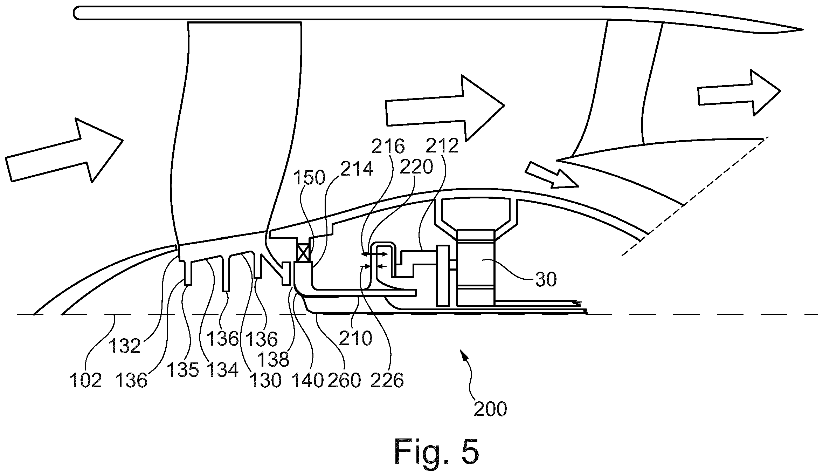

Referring to Figure 5, a turbofan engine driveshaft according to a second embodiment of the disclosure is designated generally by the reference numeral 200. Features of the driveshaft 200 which correspond to those of driveshaft 100 have been given corresponding reference numerals for ease of reference.

The driveshaft 200 comprises, in axial sequence, a driving portion 210 and a driven portion 130. The driving portion 210 has a first end 212 and an opposite second end 214. The driven portion 130 is identical to that described above in relation to the first embodiment.

As outlined above, the second end 214 of the driving portion 210 is connected to the driven portion 130 by the first joint assembly 138. The variants of the first joint assembly 138 outlined above in relation to the first embodiment apply equally to the second embodiment.

The driveshaft 200 is supported radially by a bearing assembly 150 as outlined above in relation to the first embodiment.

The driving portion 210 is configured to accommodate a range of movement 216 between the first end 212 and the second end 214 of the driving portion 210.

In the embodiment of Figure 5 the driving portion 210 comprises a radially extending diaphragm 218. The driving portion 210 is formed with a serpentine cross-sectional profile in which the radially extending diaphragm 218 is embodied. In the present embodiment, the radially extending diaphragm 218 has an axial thickness 226 (i.e. a thickness in the radial direction) that varies monotonically radially along the diaphragm 218. In an alternative embodiment, the axial thickness 226 is constant radially along the diaphragm 218.

In use, the cantilevered geometrical form of the radially extending diaphragm 218 allows the first end 212 of the driving portion 210 to move axially relative to the second end 214 of the driving portion 210. This range of axial movement 220 provides for misalignment between the first end 212 and the second end 214 of the driving portion 210. In the arrangement of Figure 4, the driving portion 210 is operatively connected to the planet carrier of the epicyclic gearbox 30. The driving portion 210 is also connected to a forward, or upstream, end of a fan shaft 260. The fan shaft 260 extends rearwardly (in a downstream direction) and provides support for the fan.

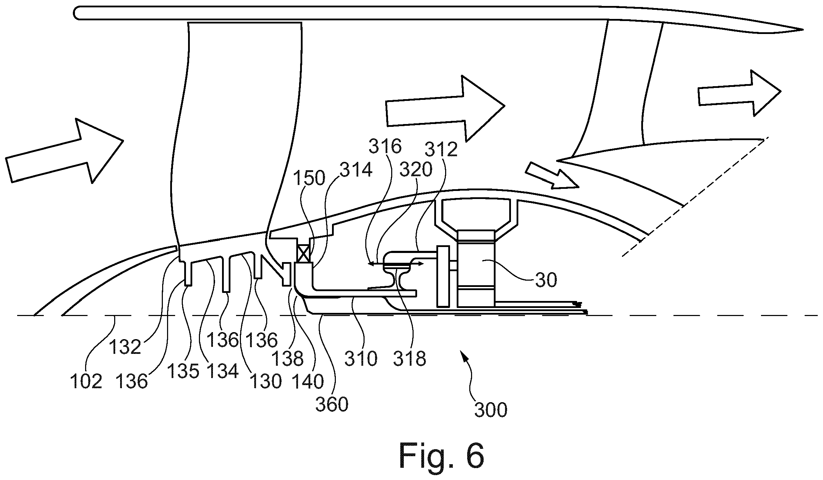

Referring to Figure 6, a turbofan engine driveshaft according to a third embodiment of the disclosure is designated generally by the reference numeral 300. Features of the driveshaft 300 which correspond to those of driveshaft 100 have been given corresponding reference numerals for ease of reference.

The driveshaft 300 comprises, in axial sequence, a driving portion 310 and a driven portion 130. The driving portion 310 has a first end 312 and an opposite second end 314. The driven portion 130 is identical to that described above in relation to the first embodiment.

As outlined above, the second end 314 of the driving portion 310 is connected to the driven portion 130 by the first joint assembly 138. The variants of the first joint assembly 138 outlined above in relation to the first embodiment apply equally to the second embodiment.

The driveshaft 300 is supported radially by a bearing assembly 150 as outlined above in relation to the first embodiment.

The driving portion 310 is configured to accommodate a range of movement 316 between the first end 312 and the second end 314 of the driving portion 310.

In the embodiment of Figure 6 the driving portion 310 comprises an axially splined coupling 318. The axially splined coupling 318 provides for axial movement of the first end 312 relative to the second end 314 of the driving portion 310.

In use, the axially splined coupling 318 allows the first end 312 of the driving portion 310 to move axially relative to the second end 314 of the driving portion 310. This range of axial movement 30 provides for misalignment between the first end 312 and the second end 314 of the driving portion 310. In the arrangement of Figure 6, the driving portion 310 is operatively connected to the planet carrier of the epicyclic gearbox 30. The driving portion 310 is also connected to a forward, or upstream, end of a fan shaft 360. The fan shaft 360 extends rearwardly (in a downstream direction) and provides support for the fan.

Various example embodiments of the invention are described herein. Reference is made to these examples in a non-limiting sense. They are provided to illustrate more broadly applicable aspects of the invention. Various changes may be made to the invention described and equivalents may be substituted without departing from the scope of the invention. In addition, many modifications may be made to adapt a particular situation, material, composition of matter, process, process act(s) or step(s) to the objective(s), spirit or scope of the present invention. Further, it will be appreciated by those with skill in the art that each of the individual variations described and illustrated herein has discrete components and features which may be readily separated from or combined with the features of any of the other several embodiments without departing from the scope of the present inventions. All such modifications are intended to be within the scope of claims associated with this disclosure.

In addition, where a range of values is provided, it is understood that every intervening value, between the upper and lower limit of that range and any other stated or intervening value in that stated range, is encompassed within the invention.

## Claims

1. A turbofan engine driveshaft (100) comprising, in axial sequence along an axial centreline (102),
a driving portion (110) having a first end (112) and a second end (114); and
a driven portion (130),
wherein the second end (114) of the driving portion (110) is connected to the driven portion (130), the driven portion (130) comprises an annular drum (132) having a radially inwardly facing surface (134), the annular drum (132) having a stiffener (135) attached to the radially inwardly facing surface (134), the driveshaft (100) being supported radially by a bearing assembly (150) at the connection between the driving portion (110) and the driven portion (130), the driving portion (110) being configured to accommodate a predetermined range of movement between the first end (112) and the second end (114) of the driving portion (110).

2. The driveshaft (100) as claimed in Claim 1, wherein the stiffener (135) comprises a plurality of stiffener portions (136) extending radially inwardly from the radially inwardly facing surface (134).

3. The driveshaft (100) as claimed in Claim 2, wherein the stiffener (135) comprises three diaphragm stiffener portions (136) extending radially inwardly from the radially inwardly facing surface (134).

4. The driveshaft (100) as claimed in any one of Claims 1 to 3, wherein the driving portion (110) is separably attached to the driven portion (130) by a first joint assembly (138).

5. The driveshaft (100) as claimed in Claim 4, wherein the first joint assembly is a Curvic™ coupling (140).

6. The driveshaft (100) as claimed in any one of Claims 1 to 5, wherein the driving portion (110) comprises an axially extending cylindrical portion (118) between the first end and the second end, the cylindrical portion (118) providing a predetermined range of radial movement between the first end (112) and the second end (114) of the driving portion (110).

7. The driveshaft (100) as claimed in Claim 6, wherein a radial thickness of the cylindrical portion (118) varies along the axial length of the cylindrical portion (118).

8. The driveshaft (200) as claimed in any one of Claims 1 to 5, wherein the driving portion (210) comprises a radially extending diaphragm portion (218) between the first end (212) and the second end (214), the diaphragm portion (218) providing a predetermined range of axial movement between the first end (212) and the second end (214) of the driving portion (210).

9. The driveshaft (200) as claimed in Claim 8, wherein the diaphragm portion (218) extends from a radially inner end to a radially outer end, and an axial thickness (226) of the diaphragm portion (218) at the radially inner end is greater than the axial thickness (226) at the radially outer end.

10. The driveshaft (300) as claimed in any one of Claims 1 to 5, wherein the driving portion (310) comprises an axially splined coupling (318) between the first end (312) and the second end (314), the axially splined coupling (318) providing a predetermined range of axial movement between the first end (312) and the second end (314) of the driving portion (310).

11. The driveshaft (100:200:300) as claimed in any one of Claims 1 to 10, wherein the bearing assembly (150) is positioned radially outwardly of the connection between the driving portion (110:210:310) and the driven portion (130:230:330).

12. A gas turbine engine comprising, in axial sequence:
a core engine (10);
a gearbox (30):
a driveshaft (100:200:300) as claimed in any one of Claims 1 to 11; and
a fan (23),
wherein an output from the gearbox (30) is operatively connected to the driving portion (110) of the driveshaft (100), and the driven portion (130) of the gearbox (30) is operatively connected to the fan (23).
